# EUROPEAN PATENT APPLICATION

(11) **EP 1 324 116 A2**
(43) Date of publication of application: **02.07.2003**
(21) Application number: 03006158.4
(22) Date of filing: 08.07.1999
(51) Int. Cl.: G03B 31/06

(54) **Selectively attachable sound storage device**

(30) Priority: 08.07.1998 EP 98305436
(62) Divisional of application: 99931375.2
(71) Applicant: Hewlett-Packard Company, A Delaware Corporation, Palo Alto, CA 94304 (US)
(72) Inventor: Adams, Guy de Warrenne Bruce, Stroud, Gloucestershire GL5 2JF (GB); Frohlich, David Mark, Westbury on Trym, Bristol BS9 3SS (GB); Rix, Malcolm, San Diego, CA 92116 (US)
(74) Representative: Lawrence, Richard Anthony

(57) **Abstract**

A passage of sound is recorded on to an electronic storage medium 12 for inclusion within a sound storage device 6, 7, 8 which is selectively engageable with an arbitrary physical object. This engagement can be provided by a number of conventional means: a spring loaded clip (particularly suitable for engagement with objects), a weakly adhesive surface, or a magnetic element. The passage of sound may then be read from the sound storage device while it remains engaged with such an arbitrary object using an appropriate sound reproduction device 4.

This arrangement allows sound passages to be used in a very versatile fashion, particularly for annotation and messaging.

## Description

### Field of the Invention

The present invention relates to methods and apparatus for use of recorded sound, particularly for attaching recorded sound to physical objects.

### Discussion of Prior Art

A large number of methods of recording sound, and sound recording media, exist. However, although sound has many advantages which other forms of communication and content provision do not have (particularly personality and immediacy), it is currently difficult to use recorded sound in a versatile, general purpose way in relation to arbitrary objects. In particular, it is difficult to use recorded sound in connection with objects and media customarily found in the home or office (papers, work surfaces etc.) in a cheap, immediate and effective manner.

### Summary of Invention

Accordingly, the invention provides a sound storage device as described in claim 1.

This arrangement is particularly advantageous, as it allows for simple addition of sound to arbitrary objects which can then be read very simply with an appropriate reproduction device, while leaving the association between the sound and the object intact until it is desired to remove it. This is clearly advantageous for situations such as messaging in an office environment. Such devices can thus usefully be re-recorded when the original passage of sound is no longer required, reducing the overall cost of use.

The attachment mechanism may be chosen for suitable classes of arbitrary object. One option is for the mechanism to be a spring clip - this is particularly suitable for attachment to paper documents. Alternatives are adhesive surfaces (suitable for attachment to objects with a surface to which the adhesive surface weakly adheres) or a magnetic element (suitable for objects attracted to the magnetic element).

Further advantages can be found if the sound storage device is adapted also to retain information of other types, such as an image, an archive reference, or information relevant to the capture of the passage of sound. This is particularly useful if sound reproduction devices are available which are also able to consume or otherwise use such further information.

A variety of sound storage elements are available - a particularly suitable choice is an integrated circuit. Contact to devices which can read or write to the sound storage element can be made by appropriate electrical contacts, exposed for access when the engagement mechanism is in operation.

In a further aspect, the invention provides a sound recording and playback system as defined in claim 12.

It may be a particularly advantageous arrangement for the sound recording device and the sound reproduction device to be the same (for example, a dictation device).

In a still further aspect, the invention provides a method of temporarily annotating arbitrary objects with sound as claimed in claim 14.

### Description of Drawings

Embodiments of the invention are described further below, by way of example, with reference to the accompanying drawings, in which:
Figure 1 shows the elements involved with recording of sound for use in accordance with embodiments of the invention, and those involved with use of the recorded sound by a user;
Figures 2a, 2b and 2c show examples of electronic storage media which are removably attachable to printed images, in accordance with embodiments of the invention: Figure 2a shows a common rear face whereas Figure 2b shows a front view of a paperclip having Figure 2a as a rear face and Figure 2c shows a front view of an adhesive tab having Figure 2a as a rear face;
Figures 3a and 3b show in plan view and side elevation respectively the mounting of an electronic storage device on to a flexible substrate to provide a device usable in the arrangement of Figure 2;
Figure 4 shows schematically the components required for playback of a passage of sound held on an electronic storage medium as a digital signal in an example of a system as shown in Figure 1;
Figure 5 shows schematically the components required for playback of a passage of sound held on an electronic storage medium as an analog signal in an example of a system as shown in Figure 1;
Figure 6 shows a sound reproduction device for reproducing a passage of sound held on an electronic storage medium suitable for use in the system of Figure 1; and
Figure 7 shows the elements of a sound recording system usable in the context of the invention.

### Specific Description of Preferred Embodiments

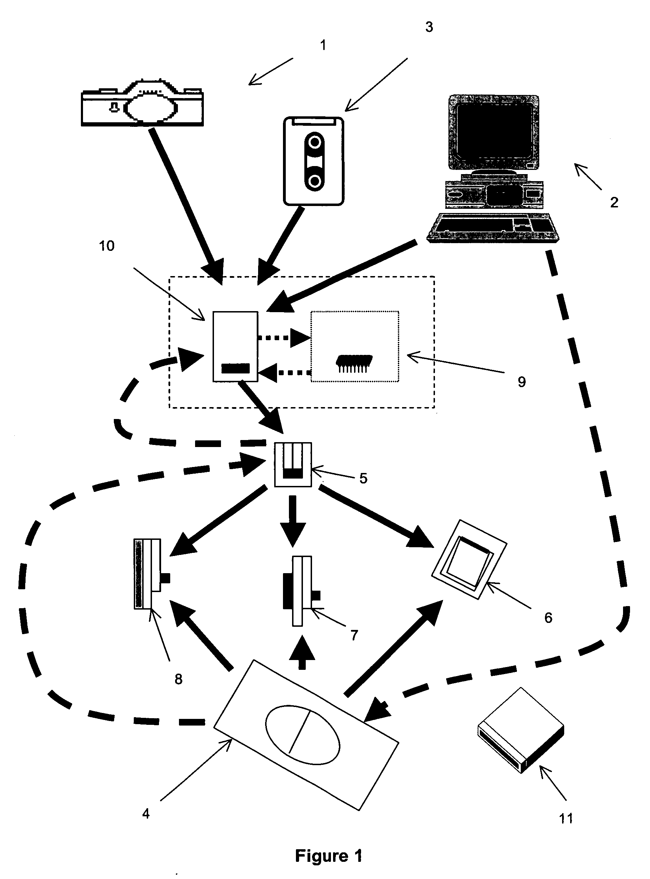

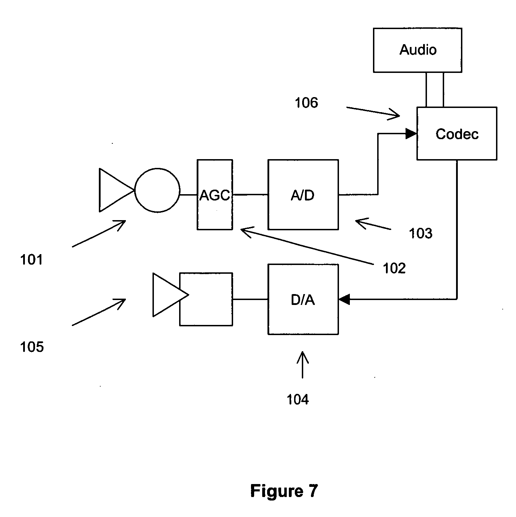

Basic components in a system for provision, and use, of sound clips for attachment to arbitrary objects are shown in Figure 1. The sound capture device may be any of the conventional alternatives for sound capture, such as a dictation device 3, or a personal computer 2 with microphone, or even a device such as a camera 1. There are a multitude of alternative capture devices (telephone answering machines, tape or disk recorders, etc) - essentially any form of device for capturing a passage of sound can be used. The basic elements of a sound capture device are as shown in Figure 7: a microphone 101 and an automatic gain controller 102 (in digital embodiments, such as is specifically shown in Figure 1, an analog/digital converter 103 and a codec 106 are also required) - where playback is also available, a loudspeaker 105 (and, if digital, a digital/analog converter 104) must also be provided. Typically a memory 107 for storage of audio and image information will also be required.

This process of sound capture may be analog, on to an analog sound recording medium Alternatively, and preferably, sound capture may be digital, with sound stored in an appropriate storage medium (for example, on an Iomega "Clik" disk ("Clik" is a trade mark of Iomega Corporation) or on a Sandisk "Compactflash" storage device ("Compactflash" is a trade mark of Sandisk). In this event, the digital data can be provided to a digital processing means (such as personal computer 2). This is advantageous, as it allows for easy editing of sound data.

The created sound then needs to be sent (possibly after editing on personal computer 2 or elsewhere) to a clip recording device 10. This clip recording device 10 may itself have processing capacity (with the possibility of editing or reviewing sound clips) or it may be attached to (perhaps as a peripheral to) a processing device 9 with this capacity (perhaps again a personal computer - maybe the same as through which sound was captured). This clip recording device 10 could perhaps be integrated with another type of media device (such as a document printer).

Different kinds of clip can then be provided (either with a single clip recording device 10 or by a series of alternative clip recording devices 10, according to design), for connection with different objects. The requirements of the clip are that it contains an electronic storage device, but also that it has an attachment mechanism to enable selective engagement between the body and an arbitrary object of a type suitable for engagement with the attachment mechanism (in essence, that it can engage with any object for which the form factor of the attachment mechanism is suitable) and moreover so that the passage of sound can be read out from the device while it is still engaged to an object. A variety of attachment types are suitable for use within these constraints. A spring clip 6 maybe used for connection to documents, whereas a magnetic clip 7 may be used for connection to metallic objects, and an adhesive clip 8 used for contact to surfaces generally. These different types of clip are, advantageously, all removably attachable (for example, the adhesive clip 8 may employ a weakly adhering adhesive). It is also advantageous in certain embodiments for clips to be reusable - that is, they can be returned to clip recording device 10 and re-recorded.

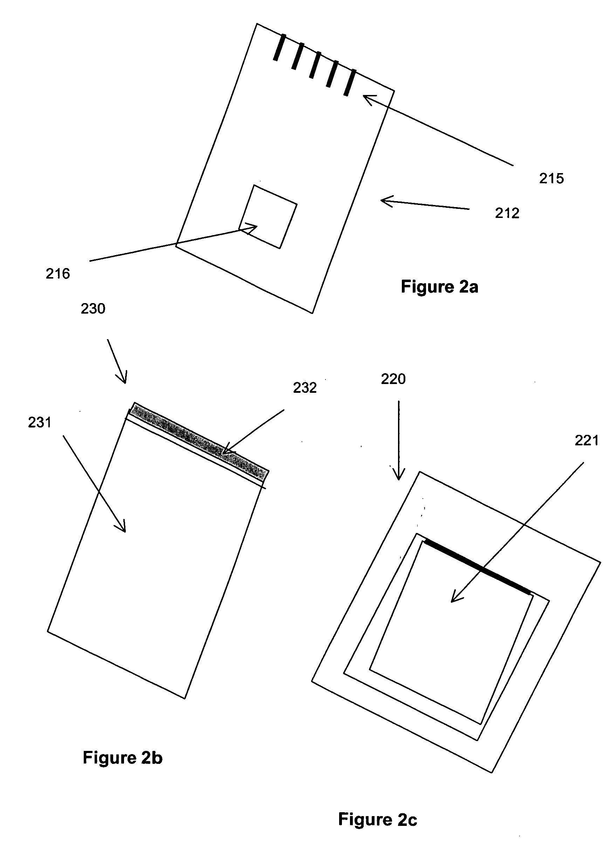

A key element in the clip is an electronic storage device, which is used for storage of the passage of sound. Such a device is shown in more detail in Figure 2a. It comprises a die 216 containing a memory (which may be for example a flash memory, or another form of EEPROM or PROM) in which the passage of sound is recorded, the die 216 being connected by tracks to connectors 215. The die 216, the tracks and the connectors 215 are all mounted on an appropriate substrate. Design and function of the electronic storage device is discussed further below.

For the clip to be played, a sound reproduction device 4 is employed. This can be connected to the electronic storage device (the electronic storage device is advantageously positioned within the clip such that this is possible without removing the clip from its engagement with any physical object) to enable information stored in the electronic storage device to be transferred to the sound reproduction device 4, the sound reproduction device 4 containing means to convert the information received from the electronic storage device into the passage of sound. Sound reproduction device 4 is adapted to be detachable or otherwise remote from the clip when no connection between the electronic storage device and the sound reproduction device 4 is required.

As is shown by the dotted lines on Figure 1, a system without a dedicated clip recording device 10 is quite possible. The most logical alternative solution is for the sound reproduction device 4 to be provided with the capability to write as well as read recorded sound, and for clips to be recorded at the sound reproduction device 4. However, any system component (particularly those which already include capacity for sound reproduction) may in principle be adapted to have the capacity to write sound on to clips.

Other elements may be provided in this system. A useful further such device is a storage applicance 11, which is adapted to both read and write passages of sound to and from clips, and which is also adapted to hold a large number of passages of sound, preferably in an indexed archive for convenient retrieval.

As the person skilled in the art will appreciate, the system of Figure 1 could be expanded or modified by use of different components with different or expanded functionality, or by appropriate communication mechanisms between the components. Any component with appropriate functionality for capture, writing or playback of sound could in potential be used, as could any component type that could be effectively modified for such a purpose or to include such a purpose along with its existing functionality. If appropriate communication mechanisms were present, any appropriate communication type or path could be used between appropriate system components. For example, using a protocol such as JetSend (developed by the present applicant and described at http://www.jetsend.hp.com/JSHome.html) direct communication between a dictaphone and a storage appliance, or any other pair of JetSend enabled appliances, to transfer sound (or other) content an appropriate negotiated form would be possible.

Different forms of removable attachment are shown - clip 220 in Figure 2c resembles clip 6 in Figure 1 and has a conventional paperclip design, with storage device 212 on the rear face of central leg 221 of the clip 220. Alternatively, as shown in Figure 2b, storage device 212 is on the rear face of tab 230, of which the front face comprises adhesive material (preferably weakly adhesive, to allow re-use) and an alignment ridge 232 is provided to allow accurate location of a document edge. The sound information now need have no association with a specific image, but may be attached instead to a document - for example, as a note providing a brief summary of a document, or giving instructions as to how it should be handled or processed. If no such edge marker is used, such clips can be used for attachment to a general purpose surface (as for clip 8 in Figure 1). Instead of a weakly adhesive surface, a clip as shown in Figure 2b could have a weakly magnetic surface, in which case it could achieve the function of clip 7 shown in Figure 1.

All such clips could readily be re-recorded and reused. The form factor employed would be appropriate to the intended use: for use with documents, the form factor could be that of a more or less conventional paperclip design such as clip 220, or a sheet of paper held with a weakly bonding glue such as tab 230: whereas for use with other objects, the electronic storage device could be provided on a magnetic base (for use as a fridge magnet, for example). As the skilled man will appreciate, a variety of form factors are available possessing the common feature of removable attachment to a target object. The formation and recording of clips will be discussed further in connection with the clip recording device 10.

The information recorded on electronic storage device 12 may be more than a simple passage of sound: additional information such as time of recording or even a related image, video or data file may be added. Clearly, this is particularly appropriate where sound is stored digitally on electronic storage device 12. Such information could be entered and recorded at the sound capture device (this may include information such as the time of recording) or may contain extensive annotation or other information provided at personal computer 2, sound reproduction device 4, or elsewhere: such information may be provided as a text file, or in an appropriate file format. Examples of particular additional information, and the consequent advantages, will now be discussed.

One possibility is for the electronic storage device to contain an image (perhaps as a GIF file) to which the sound passage relates. This image could be provided as a full representation of an original image (to allow it to be recreated) but could also be provided as a thumbnail for use as a low cost method of identifying the sound clip. A series of images could be provided, or even a video clip (perhaps a video clip to which the passage of sound was an appropriate reference). Provision of such additional information can make it advantageous for the sound reproduction device 4 to also contain a display (not shown). This display may be adapted to show some or all of the additional information recorded in the memory, possibly including a representation of images (or video) stored.

Location of capture could be recorded in such further information: either by user input, or conceivably by means of a GPS receiver or similar location sensing means within the camera itself. Audio settings could be recorded similarly, and in many cases by an appropriate manner of recording information produced automatically by the capture device. User annotation could also be provided in the capture device.

Other information types that could be provided would more typically be added in processing of an image at personal computer 2. A particularly useful indication is a reference to an archive (such an archive reference might be in the form of a web URL, a personal computer directory, or a flash card number). Other information added could be information to assist in searching, such as classification of the audio by type (for example, speech or ambient sound), or simply to identify relevant or associated material (again, a web URL on the public internet for a site associated with the captured element). Other information typically added at the personal computer point could be related to security, or other forms of control (for copyright licensing purposes, for example) - such information could be a total number of copies of the data allowed, or text information indicating the copyright owner. The sound reproduction device 4 would again be an appropriate place to add information, particularly annotation by the user.

Further description of particular embodiments of the electronic storage device, the clip recording device, and of the sound reproduction device are provided below.

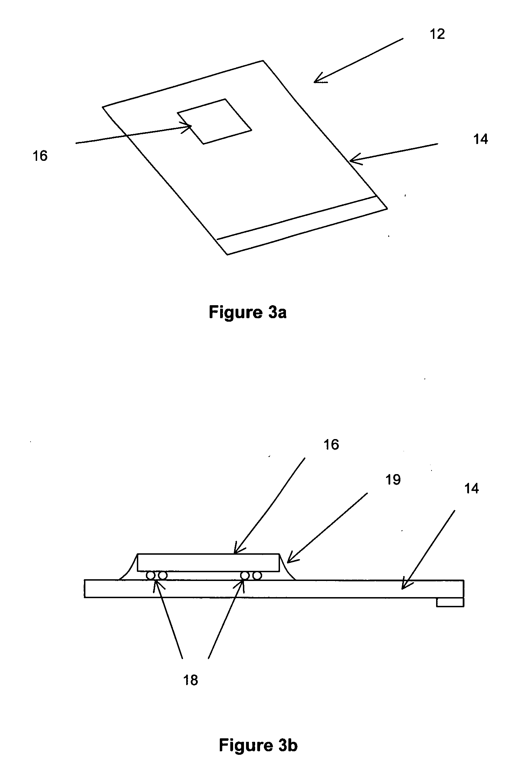

The construction of a particularly suitable electronic storage device, here termed an audiotab, is shown in Figure 3a. Die 16 contains a memory device - advantageously a flash memory or other non-volatile EEPROM, though another form of PROM could provide a suitable alternative. As shown in Figure 3b, die 16 is fixed to a substrate 14 by a number of solder bumps 18 to establish electrical connection between the die 16 and the conducting tracks on the substrate 14, and an insulating material is provided as a fill 19 to bind the die 16 into a common structure with the substrate 14. The substrate 14 is then mounted in or on an appropriate clip body. This aspect is described further with respect to the chip recording device. In some cases (such as in the case of a clip which is to be attached to documents, particularly where the attachment mechanism is by a weakly adhesive surface), it is desirable for the substrate 14 to be flexible, and in some cases of at least comparable flexibility to a document, otherwise the chance of the electronic storage device becoming detached increases significantly and the clip and document combination will become more difficult to handle.

In the embodiment shown, connections to the audiotab are made by contact with a device (generally the sound reproduction device) abutting the edge of the printed image 11 in some way. Other forms of connection are quite possible. For example, connection could be made by surface contact, rather than by an edge connection of this type. Alternatively, signals and power could be transmitted without direct contact (signals by a variety of means, power typically by induction). It should also be noted that although connections to the audiotab for both signal and power are provided together (in preferred embodiments the audiotab will have no source of power itself, but will draw power from a device accessing it), this is not a necessary feature of the invention, and the two could be provided through different connectors, for example.

Also possible are different types of audiotab construction. For example, it may be possible to print appropriate circuitry directly on to an appropriate substrate material, removing the need for a chip (and hence for the mounting of the chip on to the substrate).

The clip recording device 10 and its use will now be further described.

The essential function of this device is to download a passage of sound into an electronic storage device, and to provide as an output a recorded clip as described. As the person skilled in the art will be aware, there are a number of ways in which this can be realised. Mechanically complete clips may be provided at the device to be recorded with sound. Alternatively, if mechanically advantageous at the clip recording device, electronic storage devices on substrates may be first recorded, and then integrated with a particular clip body. This may be a preferred choice where the clip recording device is pre-loadable with a number of electronic storage devices for recording, and particularly where the clip recording device itself is adapted to use more than one kind of clip body (and hence provide more than one kind of clip - for example, it is adapted to provide either spring loaded clips 6 or weakly adhesive clips 8).

Mechanically, the clips themselves may be simple devices, designed for their intended use, and manufactured in a conventional manner. If the clips are preassembled prior to recording, techniques such as overmoulding maybe used (suitable for the spring clip type) or the substrates on which the electronic storage devices are mounted may simply be bonded to a conventional clip (or magnet, or adhesive surface) structure with an appropriate bond (adhesive, solder and welding are all possibilities available with appropriate structures). Alternatively, in cases where the clips are not assembled until after recording, a bonding element of some kind is provided within the clip recording device (where bonding here may include mechanically manipulating a clip body relative to a mounted electronic storage device to lock the electronic storage device into engagement with the clip body).

Where a stack of blank clips, or electronic storage devices (with separate clip bodies) is provided in the chip recording device 10, appropriate automatic handling mechanisms are provided. Blank clips or devices could be provided in a cartridge form, or on a bandolier. The bandolier solution may be particularly appropriate for blank electronic storage devices, as these could then be made self adhesive and after recording could be detached from the bandolier and the adhesive agent used to provide or contribute to the engagement between the electronic storage device and the clip body. Appropriate automatic handling would preferably be provided for the clip bodies also. Where alternative clip bodies could be provided, it would be desirable for these to be designed so that each was adapted to carry the same type of mounted electronic storage device, and so that a minimum of user action was required to change between recording one type of clip to recording another.

The clip recording device 10 can be provided as a separate component of the system. However, it may be advantageous for the clip recording device to be provided as a peripheral to a processing device (possibly personal computer 2 or another personal computer), to allow easier user control and greater flexibility of use. Another appropriate solution is for the clip recording device to be included within another device of different functionality. A suitable choice may be a document printer, or a multifunction device which has document printing as one of its functions. A particularly suitable device would be a document printer adapted to record passages of sound on to mounted electronic storage devices for fixed attachment to printed documents. Such a printer is described in greater detail in European Patent Application Number 98305436.2 and in the International Patent Application entitled "Printed Image with Related Sound", filed on the same day as the present application and claiming priority from the aforementioned European Patent Application.

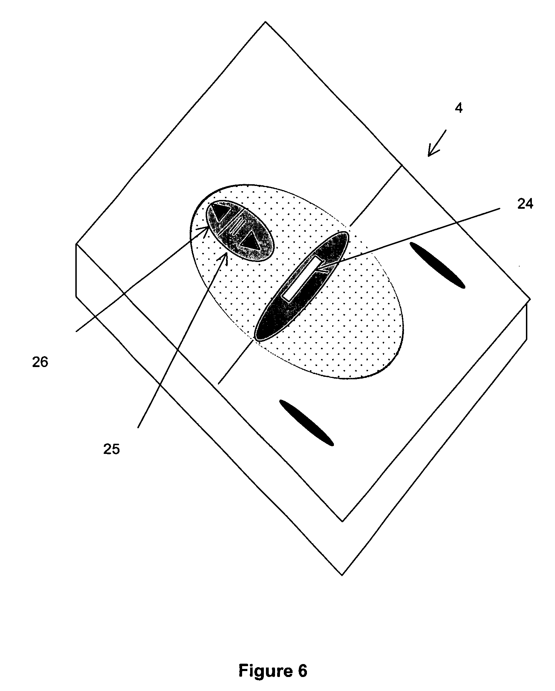

The sound reproduction device 4 will now be described with reference to Figure 6. Sound reproduction device 4 has a slot 24 adapted to receive connectors 15 of the electronic storage device 12. This allows access to the memory in the electronic storage device, and hence to the passage of sound, by the sound reproduction device 4. The reproduction device has user operable switches: in the embodiment shown in Figure 6, there is a play/stop button 25 and a rewind button 26. Sound reproduction device 4 also comprises a loudspeaker. Further functional features normal in sound reproduction devices can also be provided: for example, a headphone/earpiece connection, a fast forward button and a volume control. Capability can also be provided for recording passages of sound on to the electronic storage device at the sound reproduction device 4. The passage of sound recorded on to the electronic storage device can then be modified or replaced at the sound reproduction device 4. The circuitry necessary for sound reproduction device 4 is discussed further below together with associated features of the audiotab.

As a key advantage of the clips is that they are adapted to fit conveniently in to a user's pattern of use of objects (in essence, they mimic items which a user already uses in everyday life), it is desirable that the sound reproduction device 4 does this also. It is therefore desirable that the sound reproduction device has an appropriate form factor, and is compatible with a user's existing behaviours. Such a sound reproduction device might be, for example, pen based, or might be incorporated as a part of another device used very regularly by a user, such as a palmtop computer.

In different arrangements, sound is provided from the sound capture device (such as dictation device 3, or possibly camera 1) directly to the sound reproduction device 4 (perhaps through a temporary storage on a different storage medium, or simply from a standard audio output), with the initial recording of sound on to the electronic storage device taking place at the sound reproduction device. Alternatively, this direct connection can be from the personal computer 2 to the sound reproduction device 4, with recording of the audiotab at the sound reproduction device 4. Sound can be processed in the personal computer 2 as indicated above with conventional software, and then sent to the sound reproduction device 4 for subsequent audiotab recording. Another variant that effectively combined features is for a sound capture device and sound reproduction device 4 to be the same object: this is a practical approach as sound recording and playback capability will typically be found together. This may be a particularly effective solution for a dictation device - especially suitable where the dictation device is also able to write passages of sound on to a clip, so that a user can dictate a memorandum and affix it to a document in effectively any situation with a minimum of inconvenience. Likewise, alternative arrangements employ personal computer 2, with appropriate peripheral circuitry, as sound reproduction device 4.

The circuitry of the electronic storage device and the sound reproduction device will now be described. Other circuitry, and programs, are essentially conventional and the person skilled in the art will be well aware of the choices that are available

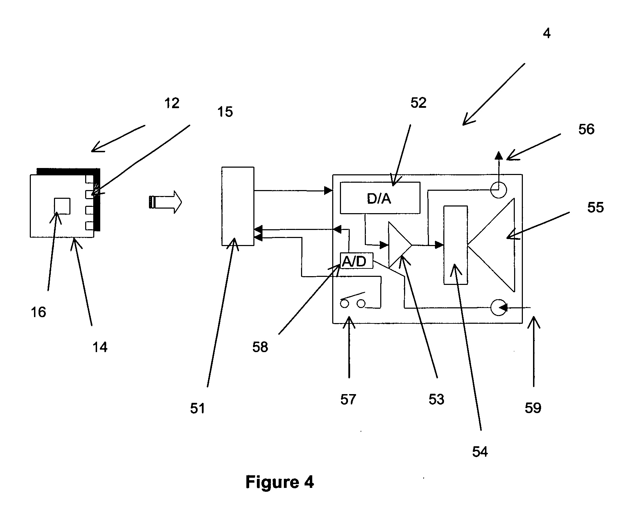

A digital solution for sound reproduction from sound stored on the electronic storage device is shown in Figure 4. Die 16 of the electronic storage device 12 contains a non-volatile memory. In a preferred design choice, electronic storage device 12 is a CMOS device having an on-chip oscillator, a high density flash memory storage array, a serial interface, a write buffer and an address decoder. The bondout pitch of die 16 is expanded by the tracks on the substrate 14 to provide a connector 15 which can readily interface with an appropriately matched connector 51 of the sound reproduction device 4. At this connector, a separate connection may be provided for every input and output required (signal, power) or alternatively these may be combined with appropriate conventional additional circuitry (for example, the signal may be provided by modulation of the power connection, in which case a modulator/demodulator circuit is also required). The arrangement shown in Figure 4 shows direct access to the memory in die 16 by the sound reproduction device and direct playing of the sound recording device: an alternative solution is for appropriate means to be provided to first download some or all of the information stored in the memory on die 16 to a separate memory in the sound reproduction device 4 for fast access by the reproduction device. As the sound is recorded in digital form, it needs to pass through digital to analog converter 52 and normally an amplifier 53 and appropriate filtration and gain stages 54 before rendering as sound through loudspeaker 55 (or alternatively provided on headphone/line output 56). Functions such as play, stop, rewind and fast forward are provided by conventional circuitry from manual switches 57. Recording at the sound reproduction device requires additionally microphone input 59, an analog to digital converter 58 and means to write to the memory in die 16. A power source for the sound reproduction device 4 is also needed, though not shown here (this may be a battery, for example). No separate power source is required for the electronic storage device, as it does not need to draw power except when connected to the sound reproduction device, which provides the power. Sound compression and decompression can also be used to maximise storage efficiency: a separate stage for decompression of stored data can be provided before digital to analog conversion (and likewise after analog to digital conversion on recording) with conventional technology.

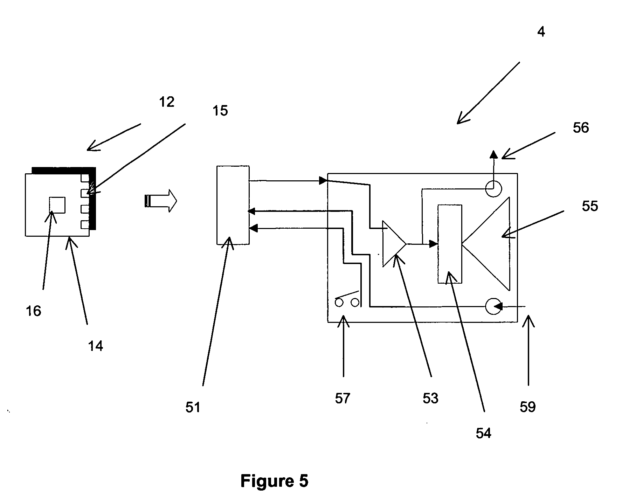

An analog sound storage solution is shown in Figure 5. The arrangement of Figure 5 is substantially similar to that of Figure 4, and equivalent components are given the same reference numbers and are not described further here. In the analog case, no digital to analog converter 52 (or analog to digital converter on recording) is required: only a buffer (not shown) is required before amplifer 53. An appropriate analog storage technology is the ChipCorder technology of Information Storage Devices, Inc. (ISD), which provides a true quantised multilevel representation of the sample per cell. In this case the electronic storage device 12 is preferably again a CMOS device with an on-chip oscillator and high density multilevel EEPROM (such as ChipCorder, discussed above) storage array; an antialiasing filter and a smoothing filter will also be required in the overall circuitry. Connection choices in supply of power and signals can be as for the digital case.

The arrangements described provide for passages of sound to be easily and effectively added to real world objects (such as paper documents and desktops) and to be consumed with similar ease by a user. The invention therefore provides for passages of sound to be added to and consumed from real world objects in such a way that they provide a real enhancement to the modes of communication available to a user.

## Claims

1. A sound storage device for annotating an arbitrary object with a passage of sound comprising:
an electronic storage device adapted to store information defining a passage of sound;
a body on which, or in which, the electronic storage device is arranged; and
an attachment mechanism to enable selective engagement between the body and an arbitrary object of a type suitable for engagement with the attachment mechanism;
the sound storage device having within it no means for playing back the passage of sound, but being adapted such that the passage of sound may be accessed from the device throughout the time of engagement between the body and such an arbitrary object.

2. A sound storage device as claimed in claim 1 wherein the attachment mechanism is a spring clip.

3. A sound storage device as claimed in claim 2 wherein the type of arbitrary object suitable for engagement with the attachment mechanism includes paper documents.

4. A sound storage device as claimed in claim 1 wherein the attachment mechanism is an adhesive surface, and the type of arbitrary object suitable for engagement with the attachment mechanism consists of objects with a surface to which the adhesive surface weakly adheres.

5. A sound storage device as claimed in claim 1 wherein the attachment mechanism is a magnetic element, and the type of arbitrary object suitable for engagement with the attachment mechanism consists of objects attracted to the magnetic element.

6. A sound storage device as claimed in any preceding claim, wherein the electronic storage device is adapted to store further information.

7. A sound storage device as claimed in claim 6, wherein said further information comprises an image.

8. A sound storage device as claimed in claim 6, wherein said further information comprises information related to the recording of the passage of sound.

9. A sound storage device as claimed in any preceding claim, wherein the electronic storage device comprises an integrated circuit.

10. A sound storage device as claimed in claim 9, wherein the sound storage device further comprises electrical contacts for engagement with a further device to allow connection between the further device and the electronic storage device so that the further device may access a passage of sound recorded on the electronic storage device.

11. A sound storage device as claimed in any preceding claim, wherein the electronic storage device is adapted to be re-recordable.

12. A sound recording and playback system, comprising:
a sound storage device as claimed in any of claims 1 to 11;
a sound recording device for recording a passage of sound on to the sound storage device; and
a sound reproduction device for obtaining the passage of sound from the sound storage device and for reproducing the passage of sound.

13. A sound recording and playback system as claimed in claim 12, wherein the sound recording device and the sound reproduction device are the same device.

14. A method of temporarily annotating arbitrary objects with sound, comprising:
storing a passage of sound in a sound storage device which comprises an electronic storage device but which does not comprise any means for playing back the passage of sound;
attaching the sound storage device to the arbitrary object such that the passage of sound may be played back by interaction with an appropriate sound reproduction device;
removing the sound storage device from the arbitrary object; and
attaching the sound storage device to a further arbitrary object such that a stored passage of sound may be played back by interaction with an appropriate sound reproduction device.

15. A method of temporarily annotating arbitrary objects with sound as claimed in claim 14, further comprising storing a further passage of sound in the sound storage device, such that on attaching the sound storage device to the further arbitrary object the stored passage of sound which may be played back is the further passage of sound.
